# EUROPEAN PATENT APPLICATION

(11) **EP 1 386 890 A2**
(43) Date of publication of application: **04.02.2004**
(21) Application number: 03017239.9
(22) Date of filing: 30.07.2003
(51) Int. Cl.: C03B 32/00, C03B 25/00, C03C 15/00, C03C 3/06, C30B 25/12, C30B 31/14

(54) **Quartz glass jig and method for producing the same**

(30) Priority: 31.07.2002 JP 2002224032
(71) Applicant: Heraeus Quarzglas GmbH & Co. KG, 63450 Hanau (DE); Shin-Etsu Quartz Products Co., Ltd., Shinjuku-ku, Tokyo 160-0023 (JP)
(72) Inventor: Sato, Tatsuhiro, Koriyama-shi, Fukushima 963-0101 (JP); Fujinoki, Akira, Koriyama-shi, Fukushima 963-0701 (JP)
(74) Representative: Kühn, Hans-Christian

(57) **Abstract**

An object of the present invention is to provide a production method which is low in cost and easily and surely increases surface layer cleanliness (purity) of a quartz glass jig used in semiconductor industry, and to provide a quartz glass jig improved in surface layer cleanliness (purity).

The above object is solved in a first embodiment of the invention comprising processing a quartz glass material through various treatments including flame treatment into a desired shape, then annealing it for strain removal, and washing it, whereby the shaped tool is heated at a high temperature falling between 800°C and 1300°C for at least 30 minutes in a clean atmosphere containing HCI gas, the heating step being after it is annealed for strain removal but before being washed. In a second alternative the step of annealing the shaped tool for strain removal is effected in a clean atmosphere containing HCL gas at a temperature falling between 800°C and 1300°C for at least 30 minutes (instead of the heat treatment step in HCL).

A quartz glass tool for use in the field of semiconductor industry is obtained showing a total mean concentration of Li, Na, Mg, K, Ca, Fe, Cr, Ni and Cu of at most 1.0 ppm in its surface layer to a depth of at least 100 µm.

## Description

### Industrial Field of Application

The present invention relates to a quartz glass tool for use in the field of semiconductor industry, and to a method for producing the same.

### Prior Art

Quartz glass jigs for use in the semiconductor industry are processed into desired shapes from naturally occurring quartz glass raw materials by means of flame processing, annealed for strain removal, and made into products after rinsing.
During high temperature heat treatment during the processing step, however, metallic impurities diffuse in the depth direction from the surface to a depth of 100 µm, and the quartz glass jigs produced in this manner are contaminated to such a depth that the impurities cannot be removed by the surface layer cleaning treatment that is performed in the final process step. These metallic impurities are discharged during the high temperature heat treatment in the semiconductor production process, and adhere to the silicon wafers as to cause defects. In the case of semiconductor industry, in particular, the discharge of problematic metallic impurities such as Na, K, Li, Mg, Ca, Cr, Fe, Ni, and Cu is not preferred.

As a means to cope with these problems, there has been made attempts such as cleaning the inner atmosphere during the process of producing quartz glass jigs, producing burners for flame processing with quartz glass, or using annealing furnace with the furnace wall being made with especially clean material.

### Problems the Invention is to Solve

The quartz glass jig obtained by the above method is confirmed to be effective, since it surely shows reduced contamination on the surface layer portion and results in silicon wafers with reduced defects when used in semiconductor industries. However, in case all, or even one of the measures above is applied, it is costly and laborious in view of sales and production.

An object of the present invention is to provide a production method which is low in cost and easily and surely increases surface layer cleanliness of a quartz glass jig used in semiconductor industry, and to provide a quartz glass jig improved in surface layer cleanliness.

### Means for Solving the Problems

In order to overcome the problems above, the quartz glass jig according to the present invention is a quartz glass jig for use in the semiconductor industry, and is characterized in that the total average concentration for Li, Na, Mg, K, Ca, Fe, Cr, Ni, and Cu up to a depth of at least 100 µm from the surface (surface layer) of the quartz glass jig is 1.0 ppm or lower.

In particular, the total average concentration for Li, Na, K, Ca, Fe, and Cu up to a depth of at least 100 µm from the surface (surface layer) of the quartz glass jig can be set to 0.5 ppm or lower.

A first embodiment of the production method of the quartz glass jig according to the present invention is, in a method for producing a quartz glass jig comprising flame processing quartz glass raw materials into desired shapes, annealing for strain removal, and making into products after rinsing, the method for producing the quartz glass jig according to the present invention is characterized in that it comprises applying high temperature heat treatment in the temperature range of from 800°Co 1300°C for at least 30 minutes in a clean atmosphere after applying the annealing for strain removal, but before rinsing.

A second embodiment of the production method of the quartz glass jig according to the present invention is, in a method for producing a quartz glass jig comprising flame processing quartz glass raw materials into desired shapes, annealing for strain removal, and making into products after rinsing, the method for producing the quartz glass jig according to the present invention is characterized in that it comprises performing the annealing for strain removal treatment in the temperature range of from 800 to 1300°C for at least 30 minutes in a clean atmosphere.

Preferably, the clean atmosphere above contains gaseous HCI.

### Mode for Carrying Out the Invention

The mode for carrying out the present invention is described below, however, it should be understood that the mode of practice is shown only as an example, and that various modifications may be made thereto so long as it does not deviate from the technical concept and idea of the present invention.

In accordance with the present invention, by applying high temperature heat treatment to the quartz glass jig after annealing for strain removal in a clean atmosphere, the surface layer contamination can be mostly removed, and can be cleaned up to a depth direction of at least 100 µm to comply with the high purity required in the semiconductor industry.

In the above case, it has been clearly confirmed that it is effective as quartz glass jigs for semiconductor industry in case high average purity is achieved for Na, K, Li, Mg, Ca, Cr, Fe, Ni, and Cu up to a depth of at least 100 µm from the surface; more specifically, the total average for the elements above is 1.0 ppm or less. That is, in case cleaning is achieved to the depth above, it is believed that no discharge of metallic impurities occur from the surface layer even if the quartz glass jig is used under high temperatures in the semiconductor industry, and that there is no influence on silicon wafers. In particular, it is more favorable if the quartz glass jig is cleaned to a depth of 200 µm, because the influence on silicon wafers can be eliminated for a longer duration of time.

Among the metal impurities above, the present invention was particularly effective for reducing Na, K, Li, Ca, Fe, and Cu. The total concentration of these elements up to a depth of at least 100 µm from the surface was found to be 0.5 ppm or lower.

As impurities other than the metal, also important is Si-OH. Si-OH strongly suppresses the diffusion movement of alkaline metals inside the glass body. Accordingly, in order to suppress the diffusion of metal impurities from the deep part 100 µm or deeper from the surface, it is preferred that Si-OH is abundant in the part 100 µm or deeper from the surface. HCI and Si-OH easily react with each other to form Si-Cl and H₂O inside the glass body. Accordingly, by controlling the diffusion of HCI within a depth of 100 µm from the surface, the amount of Si-OH that is present in the part 100 µm or deeper from the surface can be maintained unchanged.

As a method for producing quartz glass jigs above, the object quartz glass jig is subjected to high temperature heat treatment by setting in the temperature range of from 800 to 1300°C for at least 30 minutes in a clean atmosphere. Although effect can be observed at a temperature of 600°C, it is preferred to set the temperature to 800°C or higher, because a longer treatment time is necessary in a lower temperature region. At temperatures 1300°C or higher, quartz glass jigs with complicated designs may cause deformation, and at temperatures 1400°C or higher, there occurs problems such as rapid crystallization.

As the clean atmosphere, most effective is to use gaseous HCI atmosphere for removing the metallic impurities above. In addition to above, also effective are inert gases such as nitrogen, argon, helium, etc., as well as reduced pressure atmosphere and reducing atmospheres such as those of H₂. Further, all of the commonly known clean gases are effective. The purity of the gases used should be more than 99.8 % whereby organic impurities that volatilize during heating without residues can be accepted. Most preferable are gases with a purity percentage of 99.95 % and more.

The method for producing the quartz glass jig according to the present invention is described in detail below. After flame processing quartz glass raw materials into desired shapes, annealing for strain removal is performed in an atmospheric furnace at 1200°C, and while flowing gaseous HCI and gaseous N₂, the resulting product is cooled to ordinary temperature after maintaining it at 1200°C for 30 minutes.

The gaseous HCI diffuses from the surface of the quartz glass jig to a depth of 100 µm, and reacts with free elemental metal or metallic elements taken into silica network, or with OH groups to generate chlorides. Most of the chlorides become molecules at temperatures 600°C or higher as to increase its diffusion coefficient, and are gradually expelled by diffusion from the surface of the quartz glass jig to the outside. Elemental metals having large diffusion coefficients and which do not form chlorides diffuse and are removed as they are.

A case of applying high temperature heat treatment in a clean atmosphere after annealing for strain removal is described in the mode of practice above, however, in the place of conventional annealing for strain removal and the high temperature heat treatment above, the surface layer cleanliness can be improved by performing the annealing for strain removal in a clean atmosphere for at least 30 minutes. In this case, the temperature for annealing can be set in a range of from 800 to 1300°C, but preferably, it is set in a range of from 1000 to 1300°C, and more preferably, is set in a range of from 1200 to 1300°C. Most preferably, it is performed at the ordinary annealing temperature of 1200°C.
The method of performing high temperature heat treatment together with annealing for strain removal is particularly efficient because it can shorten the production process in addition to cleaning.

### Examples

The present invention is explained in detail below by way of examples, however, it should be understood that these examples are by no means limiting the present invention.

### Example 1, 2 and Comparative Example 1

A square quartz glass rod 20 mm × 20 mm × 1300 mm in size was cut out using a cutter from a quartz glass raw material produced from naturally occurring quartz glass powder, and 130 grooves 2 mm in width and 5 mm in depth were shaved out perpendicular to the longitudinal axis direction at an interval of 10 mm. Furthermore, the groove portions of the quartz glass rod above were fire polished by means of metallic burner using oxyhydrogen flame to form smooth surfaces.

In Example 1, as shown in Table 1, smooth surfaces were formed on the groove portions of the quartz glass rods above, and the quartz glass rods were allowed to stand still in an atmospheric furnace at 1200°C for 30 minutes. Then, the quartz glass rods were taken out after cooling them to room temperature over one day. The quartz glass rods thus taken out were set inside a quartz tube 300 mm in diameter and 2000 mm in length, and while exposed to flowing gaseous HCI and gaseous N₂ each at a flow rate of 1 l/min, they were maintained at 1200°C for 30 minutes. Then, the quartz glass rods were cooled to room temperature over one day while replacing the gaseous atmosphere, and were taken out from the furnace.

**Table 1**

| | Gas | Reaction temperature(°C) |
|---|---|---|
| Example 1 | HCI (after annealing) | 1200 |
| Example 2 | HCI, simultaneously with annealing for strain removal (only one heat treatment) | 1200 1200 |
| Comparative Example 1 | No treatment | No treatment |

Portions 100 mm in length were fractionated out from the quartz glass rods thus taken out, and the surface layer to a depth of 100 µm from the surface was dissolved in HF solution to perform chemical analysis thereon. Furthermore, chemical analysis was also performed on the quartz glass rod itself after removing the surface layer. Chemical analysis was carried out by flame atomic absorption spectroscopy and plasma atomic emission spectroscopy.
Concerning OH, thin slices were cut out from the samples before and after dissolving the surface layer, and infrared spectroscopy was performed on each of the different measuring points set in the depth direction. The results are given in Tables 2 and 3.

In Example 2, as shown in Table 1, the quartz glass rods above were set inside a quartz tube 300 mm in diameter and 2000 mm in length after providing smooth surfaces on the groove portions, and while exposed to flowing gaseous HCI and gaseous N₂ each at a flow rate of 1 l/min, they were maintained at 1200°C for 30 minutes. Then, the quartz glass rods were cooled to room temperature over one day while replacing the gaseous atmosphere, and were taken out from the furnace. Chemical analyses were performed in the same manner as in Example 1. The results are shown in Tables 2 and 3.

In Comparative Example 1, as shown in Table 1, after providing smooth surfaces on the groove portions, the quartz glass rods above were subjected to chemical analyses in the same manner as in Example 1. The results are shown in Tables 2 and 3.

**Table 2**

| (ppm) | | | | | | | | | | | |
|---|---|---|---|---|---|---|---|---|---|---|---|
| | Analyzed depth (µm) | Na | K | Li | Mg | Ca | Cr | Fe | Ni | Cu | OH |
| Ex. 1 | 0-100 | 0.01 | 0.05 | 0.02 | 0.02 | 0.2 | 0.02 | 0.05 | 0.02 | <0.01 | 1 |
| | >100 | 0.05 | 0.10 | 0.04 | 0.04 | 0.5 | 0.04 | 0.08 | 0.03 | 0.01 | 40 |
| Ex. 2 | 0-100 | 0.01 | 0.04 | 0.02 | 0.03 | 0.2 | 0.03 | 0.06 | 0.02 | <0.01 | 2 |
| | >100 | 0.05 | 0.11 | 0.03 | 0.04 | 0.5 | 0.04 | 0.08 | 0.03 | 0.01 | 40 |
| Comp. Ex. 1 | 0-100 | 0.40 | 0.80 | 0.20 | 0.10 | 0.9 | 0.05 | 0.18 | 0.08 | 0.05 | 40 |
| | >100 | 0.06 | 0.15 | 0.05 | 0.04 | 0.5 | 0.04 | 0.08 | 0.03 | 0.02 | 40 |
| Raw material | - | 0.03 | 0.11 | 0.05 | 0.04 | 0.5 | 0.04 | 0.08 | 0.03 | <0.01 | 1 |

In Table 2, the concentrations of the elements are given in ppm units.

**Table 3**

| | Analyzed depth (µm) | Total *1 (ppm) | Total *2 (ppm) |
|---|---|---|---|
| Example 1 | 0-100 | <0.40 | <0.34 |
| | >100 | 0.89 | 0.78 |
| Example 2 | 0-100 | <0.42 | <0.34 |
| | >100 | 0.89 | 0.78 |
| Comparative Example 1 | 0 - 100 | 2.76 | 2.53 |
| | >100 | 0.97 | 0.86 |
| Raw material | - | <0.89 | <0.78 |
| In Table 3, Total*1 and Total*2 each represent the follows. | | | |

| | | | |
|---|---|---|---|
| *1: Total average concentration for Li, Na, Mg, K, Ca, Fe, Cr, Ni, and Cu. | | | |
| *2: Total average concentration for Li, Na, K, Ca, Fe, and Cu. | | | |

As shown in Table 2, the purity for each of the quartz glasses obtained in Examples 1 and 2 was found to be almost the same as that of the naturally occurring quartz glass powder used as the raw material. In case of comparing Comparative Example 1 with the raw material, the concentration was found to be higher for all of the elements. Furthermore, chemical analyses on Al and Ti were also performed, and favorable results were obtained for quartz glasses obtained in Examples 1 and 2 as compared with that obtained in Comparative Example 1.

As shown in Table 3, the total average concentration for Li, Na, Mg, K, Ca, Fe, Cr, Ni, and Cu up to a depth of 100 µm from the surface for Examples 1 and 2 are each less than 0.40 ppm and 0.34 ppm, respectively, but is 2.76 ppm in case of Comparative Example 1. The total average concentration for Li, Na, Mg, K, Ca, Fe, Cr, Ni, and Cu for the raw material was found to be less than 0.89 ppm. Furthermore, as shown in Table 3, the total average concentration for Li, Na, K, Ca, Fe, and Cu up to a depth of 100 µm from the surface for Examples 1 and 2 are each less than 0.34 ppm and 0.34 ppm, respectively, but is 2.53 ppm in case of Comparative Example 1. The total average concentration for Li, Na, K, Ca, Fe, and Cu for the raw material was found to be less than 0.78 ppm.

### Effect of the Invention

As described above, the present invention increases the cleanliness of the surface layer of the quartz glass jig for use in the semiconductor industry at low cost, by easily and surely removing almost all of the surface layer contamination during the process.

## Claims

1. A method for producing a quartz glass tool for use in the field of semiconductor industry, which comprises processing a quartz glass material through various treatment including flame treatment into a desired shape, then annealing it for strain removal, and washing it, whereby the shaped tool is heated at a high temperature falling between 800°C and 1300°C for at least 30 minutes in a clean atmosphere, after it is annealed for strain removal but before being washed.

2. A method for producing a quartz glass tool for use in the field of semiconductor industry, which comprises processing a quartz glass material through various treatment including flame treatment into a desired shape, then annealing it for strain removal, and washing it, whereby said annealing the shaped tool for strain removal is effected in a clean atmosphere at a temperature falling between 800°C and 1300°C for at least 30 minutes.

3. The method for producing a quartz glass tool as claimed in claim 1 or 2, wherein the clean atmosphere is an HCI gas-containing atmosphere.

4. The method for producing a quartz glass tool as claimed in any of claims 1 to 3, wherein the temperature is between 1000°C and 1300°C.

5. The method for producing a quartz glass tool as claimed in anyone of claim1 to 4, wherein the temperature is between 1200°C and 1300°C.

6. A quartz glass article for use in the field of semiconductor industry obtainable by the method according to at least one of the claims 1 to 5, said quartz glass article comprising: a shaped quartz glass tool having a surface layer with a depth of at least 100 µm, and said surface layer having total mean concentrations of Li, Na, Mg, K, Ca, Fe, Cr, Ni and Cu that are 1.0 ppm or less.

7. The quartz glass article as claimed in claim 6, wherein the total mean concentration of Li, Na, K, Ca, Fe and Cu in the surface layer up to the depth of at least 100 µm are 0.5 ppm or less.
